# EUROPEAN PATENT APPLICATION

(11) **EP 3 051 366 A1**
(43) Date of publication of application: **03.08.2016**
(21) Application number: 16152717.1
(22) Date of filing: 26.01.2016
(51) Int. Cl.: G05B 13/02, G05B 15/02, F24F 11/00, G05D 23/19

(54) **CONTROL METHOD AND SYSTEM OF ENERGY-CONSUMING DEVICES FOR BUILDING USING OCCUPATIONAL LEVEL**

(30) Priority: 27.01.2015 PL 41107615
(71) Applicant: MATEX CONTROLS Sp. z o.o., 05-092 Lomianki (PL)
(72) Inventor: Michalski, Marcin Tomasz, 05-092 Kie pin (PL); Stojek, Radoslaw, 23-235 Popów (PL)
(74) Representative: Wlasienko, Jozef

(57) **Abstract**

The object of the invention is a control method of controlling energy-consuming devices within a building, consisting of many kₙ areas with different energy demand, where each area has at least one energy-consuming device assigned, wherein a proper level of energy consumption Pw is determined on the basis of information about occupancy level N in the particular area kₙ and depends on occupancy level N, with a proper energy consumption level P_{w1},...P_{wM} within a predefined subperiod of time (t1,...,t_{M}), during which the system turns on energy-consuming devices for time periods tₒₙ₁,...., t_{onM}, depending on the occupancy level N, in order to attain the previously determined energy consumption level Pw; having reached the previously determined energy consumption level, the system turns off energy consuming devices for periods tₒₙ₁,...,t_{offM}. The object of the invention is also a control system (1) of controlling energy-consuming devices performing the above-mentioned method.

The object of the invention is also a computer program product which performs the above-mentioned method.

## Description

### Technical Field

The invention concerns a method of control and optimisation of energy consumption in buildings of various types and purpose, which results in a decreased energy consumption and protects the environment.

### Background

Heating, ventilation and air-conditioning costs constitute a key element of building maintenance costs. This applies particularly in the case of buildings of large-area and cubature with heavy customer/user traffic and high fluctuation of technological processes which require constant changes in the operating mode of e.g.. ventilation, air-conditioning, heating and lighting systems. The target group of the invention will be owners and managers of buildings who want to lower maintenance costs, improve user comfort and are interested in rational consumption of utilities such as: electricity, heating, cooling, water etc. The ever increasing number of public use facilities, such as hypermarkets, supermarkets, shopping centres, sports facilities (sport centres, swimming pools, stadiums etc.), event and entertainment centres (cinemas, theatres, bowling lanes, clubs, etc.), large area office buildings, large area warehouse facilities, wholesale warehouses, logistics centres and industrial facilities, leads to an increase in energy consumption, thus causing a higher greenhouse gas emissions, which calls for an efficient and reliable energy consumption control system. Energy-related investments are not only costly, but also take a long time, due to the scale and technology involved. It takes between four and five years to build a large coal-fired plant with a capacity of 1,000 MW. Furthermore, the power grid contains a rapidly increasing number of power plants which offer limited regulation possibilities and have difficult-to-predict levels of production of active power, such as wind or photovoltaic power plants.

On the other hand, the construction of very efficient nuclear power plants raises concerns among the public and is expensive, at the construction, operation and decommissioning stage alike. In the case of the above-mentioned buildings of different types and purposes, such as public use facilities, the amount of energy needed to cover ventilation needs (heating, cooling) constitutes around 60% of the energy consumed by the entire building; for example lighting systems can consume up to 12% of the energy, whereas the rest goes to remaining systems which consume electricity. Hence the need to limit the energy consumption, e.g. of ventilation and air-conditioning devices, is a crucial issue.

According to European patent application EP 1 479 981 A1, there is known a method to control the fresh air supply to premises, depending on the occupancy level, namely a number of people in a particular premises, where the control system launches ventilation units sufficiently in advance before the first people coming expected. This control system manages ventilation devices by controlling the power level and launching ventilation systems in advance. However, the system can only recognise two occupancy levels within a room. It means that the number of people is assigned to only two parameters, on which further control depends, namely full occupancy or zero occupancy of the premises.

### Summary of the invention

According to the present invention, the control method of controlling energy-consuming devices in rooms of a building consisting of many kₙ areas with different energy demand, where each area has at least one energy-consuming device assigned, is as follows:
control system 1 acquires information about occupancy level N of a particular area from a system collecting data about occupancy level N within a defined time period consisting of at least one predetermined time subperiod (t₁-...-t_{M}) .

Each of the above-mentioned areas kₙ has a predefined maximum level of energy consumption by energy-consuming devices, whereas the control system (1) defines a proper level of energy consumption *Pw* on the basis of information about the occupancy level N in the particular area kₙ - the energy consumption level Pw depends on occupancy level N, with a proper energy consumption level P_{w1},...P_{wM} within a predefined subperiod of time (t₁,...,t_{M}).

In every supberiod of time (t₁, ..., t_{M}) , the system turns on energy-consuming devices for time period tₒₙ₁,...., t_{onM}, respectively, depending on the occupancy level N, in order to attain the previously determined energy consumption level Pw. After the previously determined energy consumption level has been achieved, the system turns off energy-consuming devices for time period tₒₙ₁,..., t_{offM}, respectively.

Advantageously, an energy-consuming device is turned on for the entire period of time T when the occupancy level N is above a predetermined value.

Advantageously, the minimum operating time of energy-consuming devices tₘᵢₙ depends on the load factor of the building.

Advantageously, energy-consuming devices are ventilation, air-conditioning, heating, cooling, lighting and technological devices.

Advantageously, there are many time periods (T₁,...Tₙ), separated between one another by intervals Tₚₐᵤₛₑ in which intervals Tₚₐᵤₛₑ ventilation devices are turned on additionally.

Advantageously, in areas kₙ, there are additional sensors measuring ambient parameters, especially temperature, humidity, CO₂ concentration, VOC presence, lighting intensity, sunlight level, atmospheric pressure and air flow which transmit those information to control system 1.

Advantageously, occupancy level N can be determined on the basis of the data from ticket sale systems, production planning systems, booking systems, transaction systems, IT systems, traffic counter systems, ERP systems, which transmit information about the level of those parameters to control system 1.

Advantageously, weather forecast information can be obtained and used in order to determine tₒₙ time and t_{off} time of energy-consuming devices.

Advantageously, energy price information can be obtained and used in order to determine tₒₙ and t_{off} times of energy-consuming devices.

Advantageously, prediction models can be used in order to determine tₒₙ and t_{off} times of energy-consuming devices.

The control system 1 of controlling energy-consuming devices in buildings, consisting of many kₙ areas with different energy demand, where each area has at least one energy-consuming device assigned, wherein:
control system 1 acquires information about occupancy level N of a particular area from a system collecting data about occupancy level N within a defined time period T consisting of at least one predetermined time subperiod (t₁-...-t_{M}) ;
each of areas kₙ has a predefined maximum level of energy consumption by energy-consuming devices, characterized in that the control system 1
defines a proper level of energy consumption *Pw* on the basis of information about the occupancy level N in the particular area kₙ and the energy consumption level Pw depends on occupancy level N, with a proper energy consumption level P_{w1},...,P_{wM} within a predefined subperiod of time (t₁,...,t_{M})_{,} and
in every supberiod of time (t₁, ..., t_{M}) , the system turns on energy-consuming devices for the time periods tₒₙ₁,...., t_{onM}, respectively, dependent on the occupancy level N, in order to attain the previously determined energy consumption level Pw. After the previously determined energy consumption level has been achieved, the system turns off energy-consuming devices for the time periods t_{off1}, ..., t_{offM}, respectively.
Advantageously, the system is designed to perform the above method.
The subject of the invention also includes a computer program product, which is loaded into the computer memory, that performs the method described herein.
The purpose of the invention is a solution which reduces electrical, heating and cooling energy consumption and water consumption. Thus, the emission of greenhouse gases is also reduced.
Another purpose of the invention is to provide a reliable and fully automated control system which could be helpful in the LEED (Leadership in Energy and Environmental Design) or BREEAM (BRE Environmental Assessment Method) certification process.
An indisputable advantage of the invention is a low installation cost and a fast pace of implementation and putting into commercial use.
Universal application - the method and the system can be used in all types of buildings, regardless of the condition and operating age of the automation, electric, ventilation, air-conditioning, heating and cooling systems.
An important factor which has a positive effect on the potential of the developed invention is the possibility to quickly and efficiently integrate it with existing automation systems and BMS (Building Management System). This will allow to shorten the implementation period and to limit costs and operating risk related to the process of integrating the systems, as well as will make implementing BMS independent from automation and BMS systems suppliers.
Optimisation of energy consumption using the described invention will considerably reduce CO₂ emissions in enviroment. It might be worth mentioning that pursuant to EU Directive no. 2006/32/WE of 5 April 2006 and 2010/31/UE, operators of industrial facilities have been obliged to reduce CO₂ emissions. Due to the described invention, it will be possible to reduce CO₂ emissions in a facility by up to 30%.

### Description of the drawings

The embodiment of the invention is presented in the figures below, where:
**Fig. 1** presents an exemplary multiplex cinema, which uses the control method and system of the present invention;
**Fig. 2** presents a single cinema room, which uses the control method and system of the present invention;
**Fig. 3** presents constantly turned on ventilation devices in cinema rooms, used in prior-art technologies;
**Fig. 4** presents temporarily turned on ventilation devices, controlled in accordance with the present invention. Periods of time presented in the figure are aggregated times when each device is turned on in a 24-hour period;

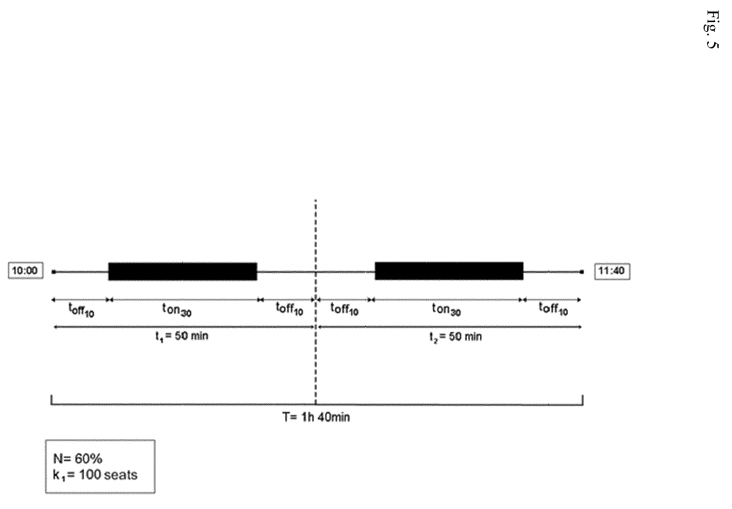

**Fig. 5** presents detailed periods of tₒₙ time and t_{off} time of ventilation devices controlled in accordance with the present invention,

### Description of the Embodiment of the invention

The invention concerns a method and system of controlling electricity, cooling and heating energy consuming devices. An example of such a device is the ventilation system.

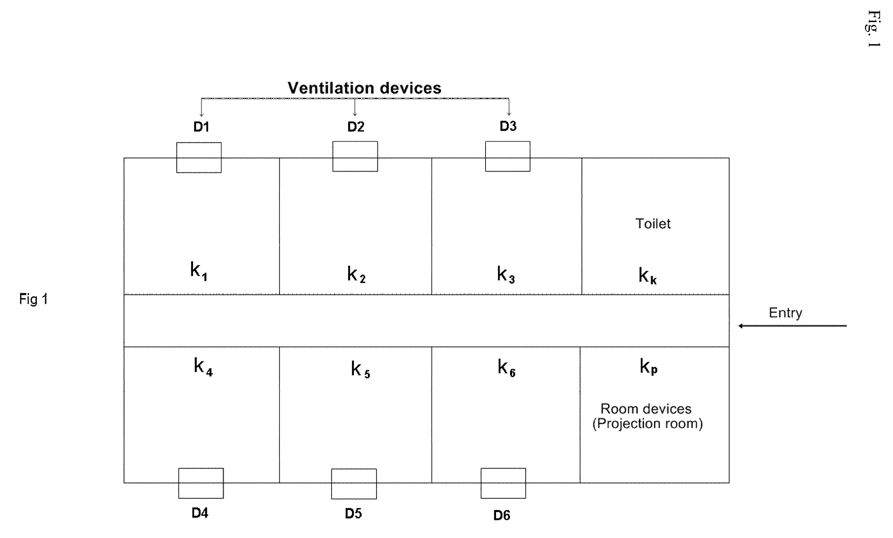

The exemplary embodiment of the invention will be described using the method of controlling energy-consuming devices - in this case, ventilation devices - indoors, e.g. in a cinema with a few screening rooms (Fig. 1). Each screening room is of a different size and can contain a different number of viewers. Each screening room was designated in Fig. 1 using labels k1, k2, k3 ... k6. Ventilation devices D1, D2 ... D6 supply ventilation air at different rates to each screening room, e.g. at an air flow volume of 1,000m³/h.

In each screening room, a different film is screened, each film with a different runtime. Customers, who want to see a particular film at a particular time, purchase the ticket at the box office. On this basis, the data collection system (in this case the box office system) gives the information about the occupancy level in a particular screening room, e.g. when room k₁ has 100 seats, and 60 people purchased the tickets, so within the specified time period T (namely between 10.00 and 11.40) the occupancy level N of room k₁ is 60%. With no viewers, i.e. at occupancy level N equal to zero, ventilation devices remain turned off during the entire duration of the film (if it is screened at all).

The control system divides this time period T into two equal sub-periods, e.g. t₁ = 50 min and t₂=50 min. It is also possible to divide into a greater number of sub-periods, e.g. three or four. In each of these sub-periods, ventilation devices D1, D2 ... D6 will be turned on for the same period of time and remain turned off for the same period of time. Operating time of devices t_{on1,}...t_{onM} depends on: cubature, installed ventilation devices, occupancy level, data from sensors and load factor of the building. Obviously, each screening room has a predetermined maximum amount of supplied air, meaning the maximum number of air exchanges per a screening room of a defined cubature with all seats occupied.

Knowing the information about occupancy level N which is 60%, the control system determines a proper operating time of ventilation devices, namely determines the energy consumption level *P_{w}* by ventilation devices in time-period T.

According to the invention, in the first sub-period t₁= 50 min., the system controls ventilation devices so that the air-handling units are turned on for time-period t_{ON1} relevant to the observed occupancy level. In this case, time-period t_{ON1} is 30min, which reflects the predetermined energy consumption level P_{w1}; ventilation devices are turned off for time-period t_{off1}=20min, with sub-period of time t₁= tₒₙ₁ + t_{off1} (t₁=30min + 20min). According to the invention, in the second sub-period t₂=50 min., the system controls ventilation devices so that the air-handling units are turned on for time-period tₒₙ₂ in line with the observed occupancy level. In that case, time-period tₒₙ₂ is 30min, which reflects the predetermined energy consumption level P_{w2}(P_{w1} + P_{w2} = P_{w}); next, ventilation devices are turned off for time-period t_{off2}=20min, with sub-period of time t₂= tₒₙ₂ + t_{off2} (t₂=30min + 20min).

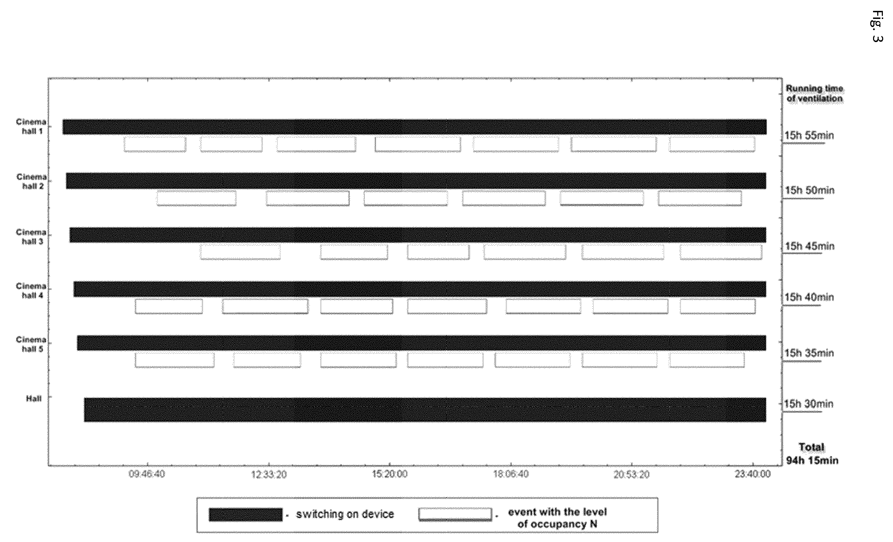

In prior-art technologies, ventilation devices operate continuously, as shown in fig. 3.

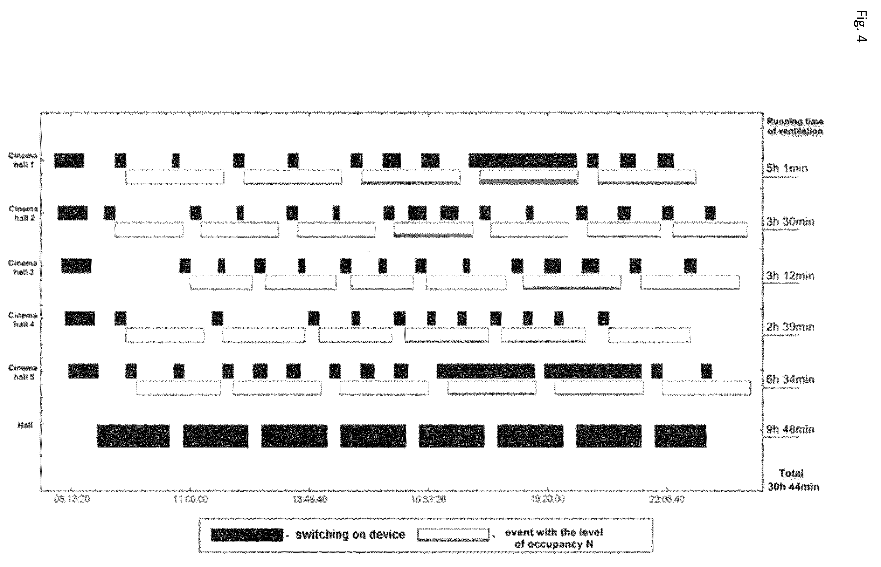

Fig 4. presents a summary of operating times of ventilation devices, controlled in accordance with the invention. The time when the devices are turned on is limited to a significant extent, at the same time maintaining safety standards and user comfort. Considerable savings can be achieved by turning ventilation devices on and off in a proper manner.

At a specified threshold number of viewers, defined individually for each screening room, ventilation devices would remain turned on all for the entire duration of a film. This is caused by the fact that at high occupancy levels, e.g. above 60%, advantageously above 70% or above 80%, ventilation devices operating times tₒₙ are shorter than time-period T, which is 100min. and is e.g. 90 min. - nevertheless, due to performance characteristic of ventilation devices, combined with the time they need to reach full efficiency and the energy it requires, it is more efficient to maintain their constant work than to turn them off and on again in short intervals.
In the case of industrial facilities, this threshold value would be a situation where in a single production zone, energy-consuming devices operate for a long time with minimal interruptions. Whereas in the case of a building such as a stadium, that situation would be a few sporting events taking place simultaneously.

In the control method there is selected sub-periods of time, e.g. one-day, a few hours, an hour, a few dozen minutes, a few minutes.

The expected operating time of ventilation devices depends not only on the number of viewers, but also on the efficiency of a particular device, the screening room parameters, weather conditions, thermal and energetic characteristics of the building, the mathematical model of the building and other settings. The most important of these settings are: the minimum operating time of ventilation devices, the occupancy level of the screening room at which ventilation operates continuously during the entire film screening and amplification factors which decide how the number of viewers affect the ultimate operating time. If there is at least one viewer in the screening room, the air-handling unit will switch on for an appropriate tₒₙ time. Air-handling units covering the rest of the building (e.g. the entrance hall, restrooms) are always operated in accordance with the previously defined time programs and automation system settings (setpoint values, regulators settings, etc.)

Additionally, prior to every screening (regardless of the number of viewers) ventilation is switched on for a period of time in order to ventilate the screening room. This is done to ensure proper ambient air parameters (temperature, humidity, CO₂ concentration) from the start of the film screening.

Similarly, ventilation devices are additionally switched on during Tₚₐᵤₛₑ breaks between screenings. This is done to ensure proper ambient air parameters (temperature, humidity, CO₂ concentration) from the start of the next film screening. It is especially important when a break between screenings is long enough to allow the air parameters in the screening room to deteriorate. In some cases, in order to optimise energy consumption, it may be more efficient to turn ventilation devices on during a break for a relative short Tₚₐᵤₛₑ time, rather than turn them on once just before the screening for a longer period of time. The aim is to ensure that air parameters meet the standards. It is especially important in case of extremely low or high external temperatures. The start up of heating and cooling devices causes extreme power usage. Given the characteristics of heating and cooling devices, it is an economically viable option to ensure their continuous operation instead of turning them off and on again. Continuous operations mean that devices are not turned off, but switched into a more economical operation mode.

A similar situation takes place in the case of e.g. conference rooms, where ventilation devices can be turned on in advance as well, in order to ensure comfort to conference participants from the moment the meeting starts, and not after ventilation devices reach operating at their full power.

The same applies to some types of lighting systems which need to be turned on in advance as they need time to reach their full power that provides lighting comfort (appropriate lighting intensity).

### Load factor of a building

In each building which is to be equipped with the control system of energy-consuming devices, the so-called building load factor is determined empirically.

This factor, which is an element of the invention, shows the entire topology of the building and its particular areas and includes many parameters. The non-limiting examples of such parameters are heat losses in particular rooms (areas), types of already installed ventilation devices and their characteristics, their minimum operating time, available ventilation power, types and number of lighting points, types and number of heaters as well as types and number of other power input points. Building topology parameters may be set on an ongoing basis or stored in the system memory.

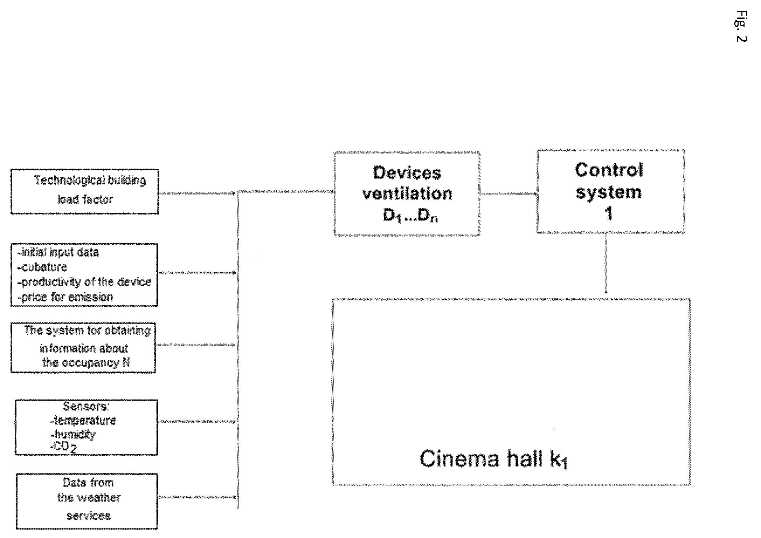

According to one of example embodiments, the control method and system of the present invention determine the occupancy level on the basis of ticket sale systems, production planning systems, booking systems, transaction systems, IT systems, traffic counter systems, ERP systems, which transmit information on the level of those parameters to control system 1 (Fig.2).

According to the present invention, the minimum operating time tₘᵢₙ of energy-consuming devices depends on the building load factor, technical specification of these devices and standards on air exchange rates. E.g., in the case of a cinema, the air exchange rate is 4-6 1/h. Tₒₙ must be lower or equal to tₘᵢₙ.

The present invention reduces unnecessary operating time of devices such as HVAC (heating, ventilation and air-conditioning) systems and lighting systems, which usually are designed assuming maximum occupancy of an area.
An area can be construed as a screening room in a cinema, a particular production line, a technological process taking place in a particular building (e.g. a logistics centre and flow of goods).

Occupancy level N points out to different information, depending on the type of building the control system was applied to. In the case of a cinema, the occupancy level N means the number of viewers in a screening room during an event, e.g. a screening of a film.
In the case of conference rooms, it is the number of participants in a conference.
In the case of industrial facilities, it may be a number of operating machines, e.g. printers in a printing house, compressors or production lines.

As far as other buildings are concerned, the occupancy level is adjusted to the technological specification of such a building;
- in industrial facilities - ERP systems
- in hypermarkets - cash register systems
- in swimming pools - ticket sale systems
- in office buildings - access cards and IP addresses of user computers.

### Sensors

The method uses sensors measuring parameters such as temperature, humidity, CO₂ concentration, VOC (volatile organic compounds) concentration, lighting intensity, sunlight level, pressure, air flow, etc. They inform the systems about the status of measured parameters within the building in a specified area on an ongoing basis. Measurement values are used to regulate energy-consuming devices.
One or more sensors can be installed in particular areas of a building. Each sensor transmits information about the above-mentioned parameters to control system 1 (Fig.2).

Information obtained from a sensor (sensors) are collected in the system and affect the control method.

Another embodiment of the method and system of the present invention are large-area sport facilities, e.g. stadiums, with various rooms for sport use such as changing rooms, swimming pools, gyms as well other non-sport premises, such as conference rooms, VIP rooms or leasable office rooms and exhibition rooms. Each of these rooms serves a different purpose, thus creating a large-cubature mixed-use building with a very diversified technical load.
Large conference rooms can be divided into smaller areas, which are covered by different air-handling units.

In the case of production facilities, control takes place on the basis of a production schedule. In every facility, turning on each production unit is scheduled. This allows to control ventilation devices, lighting, existing machinery, depending on current production, the type of operating machinery and the heat and vapours they emit.

### Forecasting

The control method and system of the present invention also use weather forecast data available from weather forecast services. Those forecasts include data about future temperature, humidity, wind direction and force, rain or sunlight level.

If the date and time of an event in a building or facility are known (on the basis of an event schedule, production schedule or planned sporting events) and the data about upcoming weather conditions are available, it is possible to schedule the moment of cooling or heating of the premises so as to optimise energy consumption costs.

Alternatively or additionally to weather forecast data, the exterior temperature measurement may be provided by a sensor installed outside the building.
In order to increase the accuracy of calculations of the time needed to heat up or cool down the premises, the parameters of adjacent rooms can be taken into account, such as: temperature, humidity and pressure.
The method of the present invention creates predictive models based on mathematical algorithms, such as: physical models, genetic algorithms, neural networks and fuzzy logic. A predictive model can be created on the basis of one of the above algorithms or any combination thereof. The predictive model determines the building's future demand for electrical energy on the basis of data collected in the past from systems such as: ticket sale systems, traffic counter systems, ERP systems, production planning systems, weather forecast services, etc., and generates future settings for control systems 1 (Fig.2).

### Cost optimisation

The method of the present invention may be also used to optimise costs of electrical energy. The method allows to acquire information concerning changes of energy prices in various periods of time (e.g. daily) and to use them in calculations of the operating time of energy-consuming devices. This allows for a more efficient control over electrical energy consumption. Information on prices may apply not only to electrical energy, but also to prices of heating oil, gas, etc.
Energy prices may fluctuate in a 24 -hour cycle; therefore, it is recommended to use energy when it is available at the cheaper price and to withheld from using it or even to resign from contracted quantities when energy is expensive or when the situation demands it. Examples of such situations include very cold winters, when the demand for electrical energy used for heating purposes is huge, or very hot summers, during which unit selling prices of energy spike due to working hours of offices. Fuel prices also impact energy price fluctuations.

For example, knowing the occupancy level schedule at different hours during a day, it is possible to plan preliminary heating of premises in advance for a time when unit selling price of energy is lower. Preliminary heating of premises from 15°C to 19°C and maintaining this level during a time when energy price is lower, and subsequent heating up to 22°C may be more cost-effective than an attempt to heat premises from 15°C to 23°C at a time when the energy price is high. The same applies during major heatwaves, when it is possible to cool down premises at a time when the unit selling price of energy is low.

### The application of the invention

The invention can be used together with control of ventilation and air-conditioning devices, heating and cooling devices, lighting systems in buildings, especially public-use ones, consisting of numerous areas (rooms) with different ventilation demand and energy consumption requirements. Examples of such buildings include cinemas with multiple screening rooms, office buildings, stadiums with various premises, e.g. cafés, conference rooms, lounges, offices, archives, clubs, warehouses, changing rooms and social rooms.
The invention can be also used in factories, printing houses, livestock breeding facilities, airports, warehouses and in other structures with many rooms, which can be controlled separately and where time-varying, hard-to-predefine technological processes take place.

The control method and control system according to the present invention can be used to control energy-consuming devices only in one particular room (area) of a building. They can be also used to control two or more rooms, or even in all rooms in a building, independently from each other. It is also possible to exercise control of a few separate fragments within one large area.

The control method according to the present invention can be used to remotely control numerous distant facilities. Hence, the system according to the present invention may include a control device for remote control of the system by the administrator or owner of a building.
In the above description, the invention was presented on the basis of examples of embodiment. It will be apparent to those skilled in the art that various modifications and variations can be made in the invention without departing from the scope or spirit of the invention, described in the appended patent claims.

## Claims

1. The control method of controlling energy-consuming devices in buildings, consisting of many kₙ areas with different energy demand, where each area has at least one energy-consuming device assigned, wherein:
control system (1) acquires information about the occupancy level N of a particular area from a system collecting data about occupancy level N within a defined time period T consisting of at least one predetermined time sub-period (t₁-...-t_{M});
each of above-mentioned areas kₙ has a predefined maximum energy consumption level by energy-consuming devices; **characterized in that** the control system (1):
defines a proper energy consumption level *Pw* on the basis of information about the occupancy level N in the particular area kₙ, and the energy consumption level Pw depends on occupancy level N, with a proper energy consumption level P_{w1},...P_{wM} within a predetermined time sub-period (t1, ..., t_{M}) ,
in every time sub-period (t₁,..., t_{M}), the system turns on energy-consuming devices for time periods tₒₙ₁, ...., t_{onM}, respectively, dependent on the occupancy level N, in order to attain the previously determined energy consumption level Pw, and next after the previously determined energy consumption level has been achieved, the system turns off energy-consuming devices for time periods t_{off1},..., t_{offM}, respectively.

2. Control method according to claim 1, wherein an energy-consuming device is turned on for the entire time period T when the occupancy level N is above a predetermined value.

3. The control method according to claim 1 or 2, wherein the minimum operating time tₘᵢₙ of energy-consuming devices depends on the load factor of the building.

4. The control method according to claims 1-3, wherein energy-consuming devices are ventilation, air-conditioning, heating, cooling, lighting and technological devices.

5. The control method according to claim 4, wherein there are many time periods (T₁,...Tₙ), separated between one another by intervals Tₚₐᵤₛₑ in which intervals Tₚₐᵤₛₑ ventilation devices are turned on additionally.

6. The method according to any of the preceding claims wherein additionally in areas kₙ there are sensors measuring parameters, especially temperature, humidity, CO₂ concentration, VOC presence, lighting intensity, sunlight level, atmospheric pressure, air flow which transmit information about the levels of those parameters to control system (1).

7. The method according to any of the preceding claims, wherein occupancy level N is determined on the data from ticket sale systems, production planning systems, booking systems, transaction systems, IT systems, traffic counter systems, ERP systems, which transmit information about the level of those parameters to control system (1).

8. The method according to any of the preceding claims, wherein additionally weather forecast information is obtained and used in order to determine tₒₙ time and t_{off} time of energy-consuming devices.

9. The method according to any of the preceding claims, wherein additionally information about energy price is obtained and used in order to determine tₒₙ time and t_{off} time of energy-consuming devices.

10. The method, according to any of the preceding claims, wherein prediction models can be additionally used in order to determine tₒₙ time and t_{off} time of energy-consuming devices.

11. Control system (1) of controlling energy-consuming devices in buildings, consisting of many kₙ areas with different energy demand, where each area has at least one energy-consuming device assigned, wherein
control system (1) acquires information about occupancy level N of a particular area from a system collecting data about occupancy level N within a defined time period T consisting of at least one predetermined time sub-period (t₁-...-t_{M}) ;
each of about-mentioned areas kₙ has a predefined maximum level of energy consumption by energy-consuming devices; **characterized in that** the control system (1)
defines a proper energy consumption level *Pw* on the basis of information about the occupancy level N in the particular area kₙ and the energy consumption level Pw depends on occupancy level N, with a proper energy consumption level P_{w1}, ..., P_{wM} within a predetermined time sub-period (t₁,...,t_{M}) and
in every time sub-period (t₁,..., t_{M}), the system turns on energy-consuming devices for the time periods tₒₙ₁,..., t_{onM}, respectively, dependent on the occupancy level N, in order to attain the previously determined energy consumption level P_{w}, and next after the previously determined energy consumption level has been achieved, the system turns off energy-consuming devices for the time periods t_{off1},..., t_{offM}, respectively.

12. The control system according to claim 13, wherein the system is designed to perform the method according to any claims 1-10.

13. Computer program product loaded into computer memory, which performs the methods according to any of claims 1-10.
